# EUROPÄISCHE PATENTANMELDUNG

(11) **EP 1 394 645 A2**
(43) Veröffentlichungstag der Anmeldung: **03.03.2004**
(21) Anmeldenummer: 03016469.3
(22) Anmeldetag: 22.07.2003
(51) Int. Cl.: G05D 3/00, G05B 19/19

(54) **Vorrichtung zur Lagebestimmung eines mittels eines Antriebs angetriebenen Stellsystems**

(30) Priorität: 29.08.2002 DE 10239788
(71) Anmelder: elero GmbH, 72660 Beuren (DE)
(72) Erfinder: Walddörfer, Dieter, 73252 Lenningen (DE)
(74) Vertreter: Ruckh, Rainer Gerhard, Dr.

(57) **Zusammenfassung**

Die Erfindung betrifft eine Vorrichtung zur Lagebestimmung eines mittels eines Antriebs (2) angetriebenen Stellsystems (1) mit einer Steuereinheit (3), mit einer ersten Sensoreinheit zur Generierung erster Pulse mit einer ersten Pulsfolgefrequenz, wobei in Abhängigkeit der Anzahl (R) der ersten Pulse in der Steuereinheit (3) Steuerbefehle für das Stellsystem (1) generierbar sind, und mit einer zweiten Sensoreinheit zur Generierung zweiter Pulse mit einer zweiten Pulsfolgefrequenz, die inkommensurabel mit der ersten Pulsfolgefrequenz ist. In einem Einlernvorgang wird wenigstens eine Referenzstrecke von einem Anfangswert (R₀) bis zu einem Referenzwert (R_{ref}) der ersten Pulsfolge durchlaufen, wobei der Referenzwert (R_{ref}), der durch eine vorgegebene, in der Steuereinheit (3) abgespeicherte Referenz-Phasenverschiebung (ϕ_{ref}) zwischen den ersten und zweiten Pulsen definiert ist, in der Steuereinheit (3) abgespeichert wird. In einer auf den Einlernvorgang folgenden Betriebsphase wird nach Durchlaufen derselben Referenzstrecke in der Steuereinheit (3) der bei der Referenz-Phasenverschiebung (ϕ_{ref}) registrierte aktuelle Wert (Rₐ) der ersten Pulsfolge durch den abgespeicherten Wert (R_{ref}) ersetzt.

## Beschreibung

Die Erfindung betrifft eine Vorrichtung zur Lagebestimmung eines mittels eines Antriebs angetriebenen Stellsystems.

Derartige Stellsysteme können insbesondere von Rollläden, Markisen, Rolltoren, Jalousien, Innenrollos oder Screens gebildet sein. Die Antriebe zum Betrieb derartiger Stellsysteme weisen typischerweise Asynchronmotoren auf. Die Drehbewegung dieser Motoren wird über ein Getriebe auf die Stellsysteme übertragen, so dass diese typischerweise zwischen einer oberen und unteren Endposition verfahren werden können.

Die Vorgabe der Endpositionen erfolgt bei bekannten Vorrichtungen mittels mechanischer Endschalter, welche an der jeweils gewünschten Position die Bestromung des Antriebs unterbrechen. Jedem Endschalter ist dabei vorzugsweise ein mechanisches Einstellrad zugeordnet. Die Position jedes Einstellrades ist beispielsweise an einer Spindel einstellbar. Während des Fahrweges des Stellsystems wird der jeweilige Endschalter relativ zum Einstellrad bewegt, bis in der jeweiligen Endposition der Endschalter durch Kontakt mit dem Einstellrad ausgelöst wird.

Nachteilig bei derartigen mechanischen Endschaltersystemen ist neben dem hohen konstruktiven Aufwand ein weiterer erheblicher Aufwand, der zur mechanischen Einstellung der jeweiligen Endpositionen nötig ist.

Hinzu kommt, dass verschiedene Stellsysteme wie Innenrollos oder Screens keine mechanischen Anschläge aufweisen, so dass hier eine mechanische Vorgabe von Endpositionen generell nicht möglich ist.

Prinzipiell sind auch elektronische Systeme zur Abschaltung des Antriebs von Stellsystemen in vorgegebenen Endpositionen möglich. Hierzu kann durch elektronische Zählverfahren oder dergleichen die Drehzahl des Antriebs des Stellsystems bestimmt werden. Nachteilig hierbei ist, dass die bei derartigen Zählverfahren generierten Zählimpulse nur Informationen über Relativpositionen des jeweiligen Stellsystems liefern. Derartige Systeme weisen eine unzureichende Sicherheit bei der Endlagenerfassung der Stellsysteme auf. Durch Fehler bei den Zählvorgängen infolge von Störeinwirkungen wie Spannungseinbrüchen oder Störimpulsen oder Ungenauigkeiten bei den einzelnen mechanischen Komponenten wie zum Beispiel dem Nachlaufen von Bremsen, welche den Antrieben zugeordnet sind, können erhebliche Positionierfehler auftreten, die zu einer nicht akzeptablen Ungenauigkeit bei der Endlagenerfassung führen können.

Die DE 100 41 738 A1 betrifft eine Vorrichtung zur Erfassung mindestens einer Kenngröße und einer Richtung einer Bewegung von zueinander beweglichen Teilen gemäß der Erfindung. Die Vorrichtung weist mindestens ein erstes Teilsystem mit einem ersten Sensorelement, einem zum ersten Sensorelement in seiner Lage oder in seiner Position relativ beweglichen Messgeber und einem ersten Teil einer Auswerteelektronik zur Auswertung eines ersten Messsignals des ersten Sensorelementes auf. Das zweite Teilsystem weist analog ein zweites Sensorelement, den Messgeber und einen zweiten Teil der Auswerteelektronik zur Auswertung eines zweiten Messsignals auf. Als Sensorelemente eignen sich alle Arten von Sensorelementen zur Detektion einer Relativbewegung eines Messgebers. Um die Bewegung auf eine Bewegungsinformation und eine Richtungsinformation abzubilden, werden das erste und das zweite Messsignal mit dem jeweiligen Teil der Auswerteelektronik ausgewertet. Das zweite Teilsystem ist dabei empfindlicher als das erste Teilsystem. Die Bewegungsinformation ist durch das erste Teilsystem abbildbar. Durch das zweite Teilsystem wird entsprechend keine Bewegungsinformation gewonnen. Aus beiden Teilsystemen zusammen, insbesondere aus einer Phasenverschiebung der beiden Messsignale, wird die Richtungsinformation abgeleitet.

Die DE 38 01 245 A1 betrifft ein gesteuertes elektromotorisches Antriebssystem für Tore und dergleichen Gebäudeabschlüsse, das zum Zwecke eines möglichst robusten Montagebetriebs, und ohne feinere Justierarbeiten ausführen zu müssen, installiert werden kann. Hierzu ist das Tor mit einer Steuervorrichtung versehen, die im Wesentlichen eine Positions-Angabevorrichtung, eine Speichervorrichtung und eine Referenzpunkt-Indikatorvorrichtung umfasst, welche zwischen den Torblatt-Endstellungen und außerhalb gegebenenfalls vorgesehener Haltestellungen angeordnet ist. Die Indikatorvorrichtung synchronisiert die Positions-Angabevorrichtung bei jedem Durchlauf derart, dass die von der Referenzpunktstellung in die jeweils gewünschte Stellung gesehen zu durchlaufen gewünschte Torblattbewegungsstrecke nach Maßgabe einer der angesteuerten Stellung entsprechende Speicheraussage bestimmt bzw. überprüft wird. Das System überwacht sich demnach laufend selbst und ist in der Lage, auch nach einem Stromausfall und gegebenenfalls handbetätigtem Verfahren des Torblattes zum Zeitpunkt der nächsten Antriebsmotor-Einschaltung sich selbst zu synchronisieren.

Der Erfindung liegt die Aufgabe zugrunde eine Vorrichtung der eingangs genannten Art bereitzustellen, mittels derer bei geringem konstruktiven Aufwand eine sichere und reproduzierbare Lagebestimmung eines mittels eines Antriebs angetriebenen Stellsystems ermöglicht wird.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße Vorrichtung dient zur Lagebestimmung eines mittels eines Antriebs angetriebenen Stellsystems und weist eine Steuereinheit sowie eine erste Sensoreinheit zur Generierung erster Pulse mit einer ersten Pulsfolgefrequenz auf, wobei in Abhängigkeit der Anzahl R der ersten Pulse in der Steuereinheit Steuerbefehle für das Stellsystem generierbar sind. Weiterhin weist die erfindungsgemäße Vorrichtung eine zweite Sensoreinheit zur Generierung zweiter Pulse mit einer zweiten Pulsfolgefrequenz auf, die inkommensurabel mit der ersten Pulsfolgefrequenz ist. In einem Einlernvorgang wird wenigstens eine Referenzstrecke von einem Anfangswert R₀ bis zu einem Referenzwert R_{ref} der ersten Pulsfolge durchlaufen, wobei der Referenzwert R_{ref}, der durch eine vorgegebene, in der Steuereinheit abgespeicherte Referenz-Phasenverschiebung ϕ_{ref} zwischen den ersten und zweiten Pulsen definiert ist, in der Steuereinheit abgespeichert wird. In einer auf den Einlemvorgang folgenden Betriebsphase wird nach Durchlaufen derselben Referenzstrecke in der Steuereinheit der bei der Referenz-Phasenverschiebung ϕ_{ref} registrierte aktuelle Wert Rₐ der ersten Pulsfolge durch den abgespeicherten Wert R_{ref} ersetzt.

Mittels der erfindungsgemäßen Vorrichtung kann auf einfache Weise eine Absolutpositionsbestimmung des Stellsystems durchgeführt werden. Der Grundgedanke der Erfindung besteht dabei darin, mittels der beiden Sensorsysteme zwei Pulsfolgen zu generieren, deren Pulsfolgefrequenzen inkommensurabel sind. Entsprechend dem Verhältnis der beiden Pulsfolgefrequenzen wird ein großes Zeitfenster als Eindeutigkeitsbereich erhalten, in welchem die Phasenverschiebungen beider Pulsfolgen jeweils eindeutige, das heißt sich nicht wiederholende Werte annehmen.

Dadurch kann durch den Phasenvergleich der Pulsfolgefrequenzen in diesem Eindeutigkeitsbereich eine Absolutpositionsbestimmung des Stellsystems, insbesondere eine Absolutpositionsbestimmung der oberen und unteren Endlagen des Stellsystems erfolgen.

Die Größe des Eindeutigkeitsbereichs kann durch die Vorgabe der beiden Pulsfolgefrequenzen auf einfache Weise vorgegeben und an den gesamten Fahrweg des Stellsystems angepasst werden.

Zur Absolutpositionierung erfolgt eine Referenzierung der Pulse des ersten Sensorsystems, die zur Generierung der Steuerbefehle in der Steuereinheit verwendet werden. Vorzugsweise erfolgt jeweils für jede Endlagenerfassung eine separate Referenzierung innerhalb jeweils eines Eindeutigkeitsbereichs.

Die Referenzierung erfolgt in einem Einlernvorgang derart, dass ausgehend von einem Anfangswert R₀ der Pulse der ersten Pulsfolge, welche vorzugsweise der oberen oder unteren Endlage des Stellsystems entspricht, eine Referenzstrecke bis zu einem Referenzwert R_{ref} der Pulsfolge durchlaufen wird, bei welchem eine in der Steuereinheit abgespeicherte definierte Phasendifferenz ϕ_{ref} vorliegt. In einer auf den Einlernvorgang folgenden Betriebsphase wird die Referenzstrecke wiederholt von neuem durchlaufen. Dabei wird am Ende der Referenzstrecke, das heißt wenn die Phasendifferenz ϕ_{ref} zwischen den Pulsen der ersten und zweiten Pulsfolgefrequenz vorliegt, der aktuelle Wert der Anzahl der Pulse der ersten Pulse durch den Referenzwert R_{ref} ersetzt.

Da die Referenzstrecke während des Einlernvorganges und der Betriebsphase jeweils in identischer Weise durchlaufen wird, werden durch die Referenzierung der Pulse erste Pulsfolgefehler durch bauteilbedingte Störungen oder dergleichen eliminiert. Damit wird eine sichere und störungsunanfällige Endlagenerfassung gewährleistet.

Die auf diese Weise durchgeführte Endlagenerfassung von Stellsystemen erfolgt dabei ohne jegliche mechanische Einstellvorgänge und ist daher äußerst bedienerfreundlich.

Die Komponenten der erfindungsgemäßen Vorrichtung sind kostengünstig herstellbar, wobei die Sensoreinheiten bevorzugt eine kompakte, leicht montierbare Baueinheit bilden.

Die erfindungsgemäße Vorrichtung kann zur Lagebestimmung in unterschiedlichen Stellsystemen eingesetzt werden, die allgemein von Hub- oder Rollsystemen wie zum Beispiel Rollläden, Markisen, Rolltoren, Jalousien, Innenrollos oder Screens gebildet sein können.

Die erste Sensoreinheit weist vorzugsweise einen Reedkontakt auf. Dieser zeichnet sich durch eine hohe Lebensdauer aus, wobei zudem vorteilhaft ist, dass dieser zur Erfassung von Magnetfeldänderungen keinen Strom benötigt.

Die zweite Sensoreinheit ist bevorzugt als mechanische Tastereinheit ausgebildet, die einen rotierenden Schaltnocken und einen stationären Schalter mit einer Schaltfahne aufweist. Auch diese Sensoreinheit benötigt keine Stromversorgung. Der Schaltnocken ist durch eine Zahnraduntersetzung an den Antrieb gekoppelt. Durch eine geeignete Wahl der Zahnraduntersetzung kann das Frequenzverhältnis der ersten und zweiten Pulsfolgefrequenz einfach vorgegeben werden.

Die Erfindung wird im Nachstehenden anhand der Zeichnungen erläutert. Es zeigen:
- Figur 1:: Blockschaltbild eines Stellsystems mit Komponenten zu dessen Steuerung.
- Figur 2:: Perspektivische Darstellung eines Ausführungsbeispiels der erfindungsgemäßen Vorrichtung mit einer ersten und zweiten Sensoreinheit zur Lagebestimmung des Stellsystems gemäß Figur 1.
- Figur 3:: Schematische Darstellung der Komponenten der zweiten Sensoreinheit der Vorrichtung gemäß Figur 2.
- Figur 4:: Impulsdiagramme der mit der ersten und zweiten Sensoreinheit generierten Pulsfolgen.
- Figur 5:: Diagramm zur Referenzierung der von der ersten Sensoreinheit generierten Pulsfolgen gemäß Figur 4.

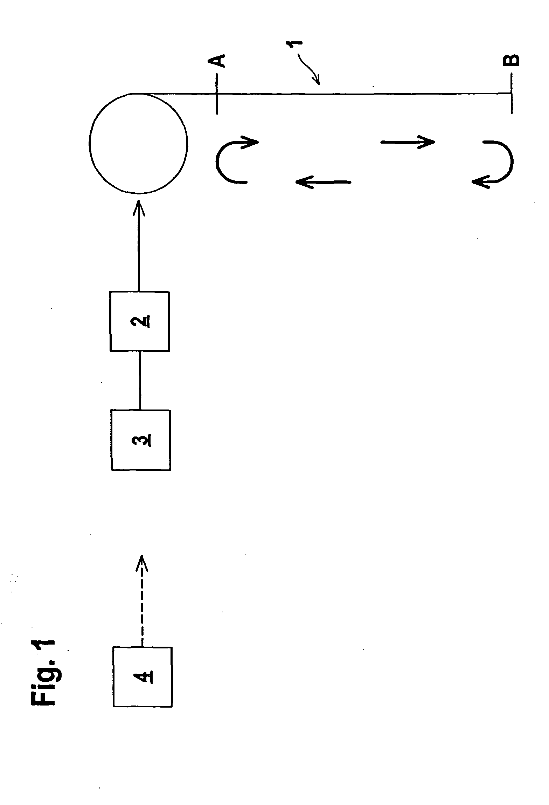

Figur 1 zeigt schematisch ein Stellsystem 1, welches allgemein als Hub- oder Rollsystem ausgebildet ist. Das Stellsystem 1 ist im vorliegenden Fall von einem Rollladen gebildet, der zwischen einer oberen Endposition A und einer unteren Endposition B verfahrbar ist.

Das Stellsystem 1 wird mittels eines Antriebs 2 angetrieben, der im vorliegenden Fall einen Einphasen-Asynchronmotor aufweist. Der Antrieb 2 wird von einer Steuereinheit 3 gesteuert, welche von einem Mikroprozessorsystem oder dergleichen gebildet ist. Durch Vorgabe der Drehrichtung des Antriebs 2 über die Steuereinheit 3 wird das Stellsystem 1 zwischen der oberen und unteren Endposition A, B verfahren. Die Bedienung des Stellsystems 1 erfolgt über ein Handgerät 4. Im Handgerät 4 ist ein nicht dargestelltes Funkmodul zum Austausch von Funksignalen mit der Steuereinheit 3 integriert, so dass die Steuereinheit 3 über das Handgerät 4 berührungslos ansteuerbar ist.

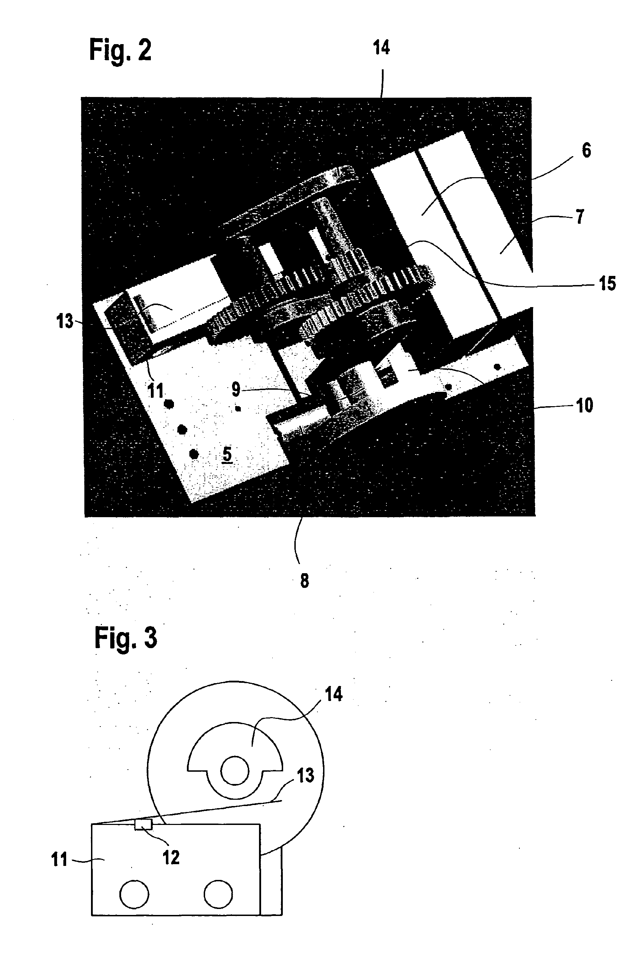

Figur 2 zeigt ein Ausführungsbeispiel einer Vorrichtung für das Stellsystem 1 gemäß Figur 1, mittels derer eine Absolutbestimmung der Positionen, insbesondere der Endpositionen A, B des Stellsystems 1 ermöglicht wird.

Die Komponenten der Vorrichtung sind auf einer Grundplatte 5 montiert und bilden so eine Baueinheit, die einfach am Stellsystem 1 montierbar ist. Als Bestandteil der Spannungsversorgung der Vorrichtung sind zwei Netzkondensatoren 6, 7 auf der Grundplatte 5 angeordnet.

Die Vorrichtung weist zur Positionserfassung des Stellsystems 1 eine erste und eine zweite Sensoreinheit auf.

Die erste Sensoreinheit weist einen Reedkontakt 8 und einen diesem zugeordneten Permanentmagneten auf. Der Reedkontakt 8 ist wie aus Figur 2 ersichtlich seitlich zu der Rotorachse 9 des Antriebs 2 angeordnet. Der Permanentmagnet, der in Figur 2 nicht dargestellt ist, ist unterhalb der Rotorachse 9 des Antriebs 2 positioniert. Dabei sind der Reedkontakt 8 und der Permanentmagnet mit parallel zueinander verlaufenden Längsachsen in Abstand zueinander angeordnet.

Als weitere Komponente der ersten Sensoreinheit ist ein halbschaliges Abschirmrad 10 vorgesehen, welches von einem Blechteil gebildet ist. Das Abschirmrad 10 sitzt auf der Rotorachse 9 auf und rotiert mit dieser mit. Die Halbschale des Abschirmrads 10 verläuft konzentrisch zur Rotorachse 9 und erstreckt sich über einen Winkelbereich von 180°.

Bei jeder Umdrehung der Rotorachse 9 liegt das Abschirmrad 10 während einer halben Periode der Drehbewegung zwischen dem Reedkontakt 8 und dem Permanentmagneten, wodurch der Reedkontakt 8 von dem Magnetfeld des Permanentmagneten separiert ist. Während der zweiten Halbperiode der Drehbewegung der Rotorachse 9 liegt das Abschirmrad 10 außerhalb des Bereichs zwischen dem Reedkontakt 8 und dem Permanentmagneten, so dass der Reedkontakt 8 mit dem vom Permanentmagneten beaufschlagt wird.

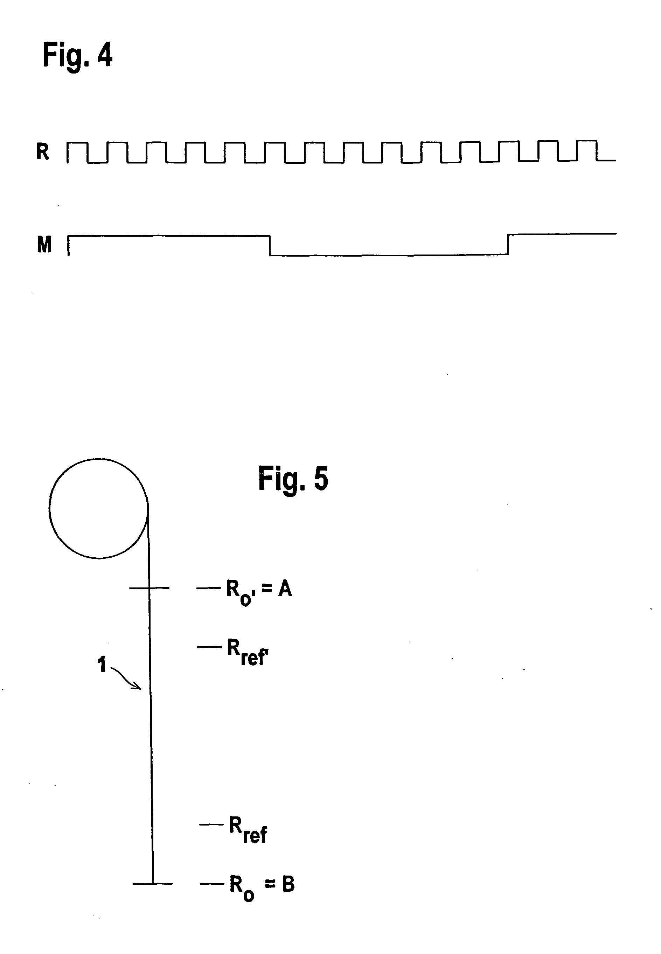

Dementsprechend wird mit der ersten Sensoreinheit eine erste Folge von Pulsen R erzeugt, die im oberen Diagramm der Figur 4 schematisch dargestellt ist. Da das Abschirmrad 10 mit der Rotorachse mitrotiert, entspricht die Pulsfolgefrequenz der ersten Pulsfolge der Frequenz der Drehbewegung der Rotorachse 9. Dies bedeutet, dass pro Umdrehung der Rotorachse 9 am Reedkontakt 8 genau ein Puls erzeugt wird. Da sich das Abschirmrad 10 über einen Winkel von 180° erstreckt, wird im vorliegenden Fall ein Puls-Pausenverhältnis der Pulsfolge von 1:1 erhalten. Durch Variation des Winkelbereichs, über welchen sich das Abschirmrad 10 erstreckt, kann das Puls-Pausenverhältnis einfach verändert werden.

Durch die Anordnung des Reedkontakts 8 und des Permanentmagnets mit parallel laufenden Längsachsen und das halbschalig ausgebildete Abschirmrad 10 wird erreicht, dass die Pulse der ersten Pulsfolge rechteckig ausgebildet sind.

Die Vorrichtung gemäß Figur 2 weist weiterhin eine zweite Sensoreinheit auf, die von einer mechanischen Tastereinheit gebildet ist. Die einzelnen Komponenten der zweiten Sensoreinheit sind zudem in Figur 3 dargestellt.

Die zweite Sensoreinheit weist einen Schalter 11 mit einem Kontakt 12 auf, der über eine Schaltfahne 13 mechanisch betätigbar ist. Figur 3 zeigt die Schaltfahne 13 in ihrer Grundstellung, in welcher diese in einem vorgegebenen Winkel von der Oberseite des Schalters 11 absteht und so keinen Druck auf den darunterliegenden Kontakt 12 ausübt, so dass der Kontakt 12 nicht betätigt ist.

Mittels eines drehbar gelagerten Schaltnockens 14 kann die Schaltfahne 13 nach unten gedrückt werden, so dass diese gegen den Kontakt 12 gepresst wird, wodurch der Kontakt 12 betätigt wird. Wie aus Figur 3 ersichtlich weist der Schaltnocken 14 zwei kreisscheibenförmige Segmente mit unterschiedlichen Radien auf, wobei sich jedes Segment über einen Winkelbereich von 180° erstreckt. Liegt das Segment mit dem kleineren Radius der Schaltfahne 13 gegenüber, so liegt der Schaltnocken 14 in Abstand zur Schaltfahne 13, so dass diese in ihrer Grundstellung verbleibt. Ist jedoch das Segment mit dem größeren Radius der Schaltfahne 13 zugewandt, so drückt der Schaltnocken 14 die Schaltfahne 13 gegen den Kontakt 12 des Schalters 11. Damit wird durch eine gleichförmige Rotation des Schaltnockens 14 die im unteren Diagramm der Figur 4 dargestellte zweite Folge von Pulsen M erzeugt. Da die Übergänge der Segmente mit den unterschiedlichen Radien abrupt erfolgen, wird mit der zweiten Sensoreinheit eine zweite Folge von Rechteckpulsen erzeugt. Die Steilheit der Flanken der Rechteckpulse wird zudem durch einen Mikro- oder Sprungkontakt in der zweiten Sensoreinheit erzielt. Da sich die Segmente des Schaltnockens 14 jeweils über einen Winkelbereich von 180° erstrecken, weist die zweite Pulsfolge ein Puls-Pausenverhältnis von 1:1 auf. Durch eine Variation der Segmente des Schaltnockens 14 kann das Puls-Pausenverhältnis entsprechend geändert werden.

Der Schaltnocken 14 der zweiten Sensoreinheit ist über eine Zahnraduntersetzung 15 bestehend aus einem Getriebe und mehreren Zahnrädern an die Rotorachse 9 des Antriebs 2 gekoppelt. Dadurch wird erreicht, dass die Pulsfolgefrequenz der zweiten Pulsfolge erheblich kleiner ist als die Pulsfolgefrequenz der ersten Pulsfolge. Durch spezifische Vorgabe der Zahnraduntersetzung 15 ist das Verhältnis beider Pulsfolgefrequenzen einstellbar.

Wesentlich hierbei ist, dass die beiden Pulsfolgefrequenzen inkommensurabel, insbesondere teilerfremd sind. Dadurch wird erreicht, dass in einem durch die Werte der Pulsfolgefrequenzen definierten Eindeutigkeitsbereich die Werte der Phasenverschiebungen der Pulse der ersten Pulsfolge zu den Pulsen der zweiten Pulsfolge einen eindeutigen Wert aufweisen.

Beträgt beispielsweise die Periodendauer der ersten Pulsfolge 10ms und die Periodendauer der zweiten Pulsfolge 121ms, so wiederholt sich eine bestimmte Phasenverschiebung zwischen den Pulsen der ersten und zweiten Pulsfolge erst nach 2,4s.

Erfindungsgemäß wird die eindeutige Phasenbeziehung der Pulse der ersten und zweiten Pulsfolge innerhalb eines Eindeutigkeitsbereichs zur Absolutbestimmung von Positionen des Stellsystems 1 ausgenutzt. Im vorliegenden Ausführungsbeispiel erfolgt eine Bestimmung der oberen und unteren Endposition A, B des Stellsystems 1.

Das hierzu angewandte Verfahren ist in Figur 5 veranschaulicht. Zur Positionierung des Stellsystems 1 werden in der Steuereinheit 3 fortlaufend die Pulse R der ersten Pulsfolgefrequenz gezählt. Der Zählvorgang beginnt bei einem Startpunkt, der zu Beginn des Betriebs des Stellsystems 1 definiert wird und in der Steuereinheit 3 registriert wird. Der Startpunkt liegt vorzugsweise in der Mitte zwischen der oberen Endposition A und der unteren Endposition B des Stellsystems 1. Ausgehend von diesem Startpunkt werden dann beispielsweise die Pulse R der ersten Pulsfolge in Richtung der unteren Endposition B zum Anfangswert am Startpunkt addiert und in entgegengesetzter Richtung subtrahiert.

Wie aus Figur 5 ersichtlich wird auf diese Weise in der unteren Endposition B der Wert R₀ für die Anzahl der gezählten Pulse R der ersten Pulsfolge erhalten, während in der oberen Endposition A der Wert R₀' erhalten wird.

Die Pulse der ersten Pulsfolge allein liefern lediglich Informationen über Relativlagen des Stellsystems 1. Insbesondere durch bauteilbedingte Störeinflüsse wie zum Beispiel Toleranzen von Bremssystemen oder Getrieben sowie durch externe Störeinflüsse wie Störimpulse kann der Zählvorgang der ersten Pulse fehlerbehaftet sein, wodurch auch die aus der Pulszählung gewonnene Positions-Information fehlerbehaftet ist.

Zur Kompensation derartiger Störeinflüsse und damit zur sicheren Absolutbestimmung der Endpositionen A, B des Stellsystems 1 erfolgt eine Referenzierung der Zählung der ersten Pulsfolge mittels der zweiten Pulsfolge der zweiten Sensoreinheit. Hierzu werden zwischen der unteren beziehungsweise oberen Endposition B, A einerseits und vorgegebenen Referenzpunkten andererseits, welche durch Referenzwerte R_{ref,} R_{ref'} definiert sind, Referenzstrecken vorgegeben. Dabei ist der einer Referenzstrecke entsprechende Zeitbereich jeweils kleiner als der durch die Pulsfolgefrequenzen definierte Eindeutigkeitsbereich ist.

Die Referenzierung erfolgt für die obere und untere Endposition A, B des Stellsystems 1 in gleicher Weise, so dass die Referenzierung im Folgenden allein für die untere Endposition B erläutert wird.

In einem ersten Schritt wird vorzugsweise über das Handgerät 4 ein Einlernvorgang eingeleitet. Der Einlernvorgang kann beispielsweise durch Drücken einer vorgegeben Tastenkombination am Handgerät 4 gestartet werden.

Während des Einlernvorganges durchläuft das Stellsystem 1 ausgehend von einem Anfangswert R₀, welcher in diesem Fall der unteren Endposition B entspricht, eine Referenzstrecke bis zu dem Referenzwert R_{ref}. Dieser Referenzwert R_{ref} ist durch eine bestimmte, in der Steuereinheit 3 abgespeicherte Referenz-Phasenverschiebung ϕ_{ref} der ersten und zweiten Pulse definiert. Hat das Stellsystem 1 die Position erreicht, bei welchem diese Phasendifferenz ϕ_{ref} zwischen den ersten und zweiten Pulsen vorliegt, so wird der zugehörige aktuelle Wert R₍ₐ₎ der Anzahl der ersten Pulse als Referenzwert R_{ref} in der Steuereinheit 3 abgespeichert. Da die Referenzstrecke zwischen R₀ und R_{ref} kleiner ist als der Eindeutigkeitsbereich, ist gewährleistet, dass sich die Referenz-Phasenverschiebung ϕ_{ref} innerhalb der Referenzstrecke nicht wiederholt, so dass diese eindeutig ist.

Das Ende des Einlernvorganges wird dem Bediener durch Anzeigemittel angezeigt. Im einfachsten Fall erfolgt die Anzeige durch einen Stopp des Antriebs 2 des Stellsystems 1.

Die während eines Einlernvorganges eingelernten Werte können bei Bedarf auch wieder gelöscht werden. Der Löschvorgang wird wiederum durch Drücken einer geeigneten Tastenkombination am Handgerät 4 ausgelöst. Die erfolgte Löschung wird dann dem Bediener angezeigt. Beispielsweise kann die erfolgte Löschung durch ein Brummen des Antriebs 2 signalisiert werden.

Während der auf den Einlernvorgang folgenden Betriebsphase erfolgt die Referenzierung der Pulse der ersten Pulsfolge. Hierzu wird jeweils wieder ausgehend von der unteren Endposition B, also ausgehend vom Wert R₀ der ersten Pulse die Referenzstrecke bis zum Referenzpunkt durchlaufen, an welchem die Referenz-Phasenverschiebung ϕ_{ref} zwischen den Pulsen der ersten und zweiten Pulsfolge vorliegt. Dann wird der dort vorhandene aktuelle Wert Rₐ der Anzahl der ersten Pulse durch den Referenzwert R_{ref} ersetzt.

Dadurch werden die Pulse der ersten Pulsfolge auf den durch die Phasendifferenz ϕ_{ref} definierten Bezugspunkt referenziert, wodurch eine reproduzierbare und sichere Absolutbestimmung der Endposition B ermöglicht wird.

Wesentlich hierbei ist dass während der Betriebsphase die Referenzstrecke ausgehend von R₀ in identischer Weise wie während des Einlernvorganges durchlaufen wird. Dadurch wirken sich bauteilbedingte Störfaktoren wie zum Beispiel der Nachlauf von Bremsen, Getriebefehler und dergleichen jeweils in entsprechender Weise auf die Zählervorgänge aus, so dass diese Effekte bei der Referenzierung eliminiert werden.

### Bezugszeichenliste

- (1): Stellsystem
- (2): Antrieb
- (3): Steuereinheit
- (4): Handgerät
- (5): Grundplatte
- (6): Netzkondensatoren
- (7): Netzkondensatoren
- (8): Reedkontakt
- (9): Rotorachse
- (10): Abschirmrad
- (11): Schalter
- (12): Kontakt
- (13): Schaltfahne
- (14): Schaltnocken
- (15): Zahnraduntersetzung

- A: obere Endposition
- B: untere Endposition
- M: zweite Folge von Pulsen
- R: erste Folge von Pulsen
- Rₐ: aktueller Wert
- R₀: Anfangswert
- R_{ref}: Referenzwert
- ϕ_{ref}: Phasendifferenz

## Patentansprüche

1. Vorrichtung zur Lagebestimmung eines mittels eines Antriebs (2) angetriebenen Stellsystems (1) mit einer Steuereinheit (3), mit einer ersten Sensoreinheit zur Generierung erster Pulse mit einer ersten Pulsfolgefrequenz, wobei in Abhängigkeit der Anzahl R der ersten Pulse in der Steuereinheit (3) Steuerbefehle für das Stellsystem (1) generierbar sind, und mit einer zweiten Sensoreinheit zur Generierung zweiter Pulse mit einer zweiten Pulsfolgefrequenz, wobei die Phasenverschiebung der beiden Pulsfolgen innerhalb eines definierten Eindeutigkeitsbereichs keine sich wiederholende Werte annimmt, wobei in einem Einlernvorgang wenigstens eine Referenzstrecke von einem Anfangswert (R₀) bis zu einem Referenzwert (R_{ref}) der ersten Pulsfolge durchlaufen wird, wobei der Referenzwert (R_{ref}), der durch eine vorgegebene, in der Steuereinheit (3) abgespeicherte Referenz-Phasenverschiebung (ϕ_{ref}) zwischen den ersten und zweiten Pulsen definiert ist, in der Steuereinheit (3) abgespeichert wird, und wobei in einer auf den Einlernvorgang folgenden Betriebsphase nach Durchlaufen derselben Referenzstrecke in der Steuereinheit (3) der bei der Referenz-Phasenverschiebung (ϕ_{ref}) registrierte aktuelle Wert (Rₐ) der ersten Pulsfolge durch den abgespeicherten Wert (R_{ref}) ersetzt wird.

2. Vorrichtung nach Anspruch 1, **dadurch gekennzeichnet, dass** das Stellsystem (1) von einem Rollladen, einer Markise, einem Rolltor, einer Jalousie, einem Innenrollo oder einem Screen gebildet ist.

3. Vorrichtung nach einem der Ansprüche 1 oder 2, **dadurch gekennzeichnet, dass** der Antrieb (2) einen Asynchronantrieb aufweist.

4. Vorrichtung nach einem der Ansprüche 1 - 3, **dadurch gekennzeichnet, dass** mit dieser die Absolutpositionen der oberen und unteren Endposition (A, B) des Stellsystems (1) erfassbar sind.

5. Vorrichtung nach Anspruch 4, **dadurch gekennzeichnet, dass** jeweils einer Endposition (A, B) des Stellsystems (1) ein Referenzwert (R_{ref}) zugeordnet ist.

6. Vorrichtung nach Anspruch 5, **dadurch gekennzeichnet, dass** jede Endposition (A, B) des Stellsystems (1) einem Anfangswert (R₀) einer Referenzstrecke entspricht.

7. Vorrichtung nach Anspruch 1-6, **dadurch gekennzeichnet, dass** die erste Sensoreinheit einen Reedkontakt (8) aufweist.

8. Vorrichtung nach Anspruch 7, **dadurch gekennzeichnet, dass** mittels des Reedkontaktes (8) ein Puls pro Umdrehung des Antriebs (2) generiert wird.

9. Vorrichtung nach Anspruch 8, **dadurch gekennzeichnet, dass** dem Reedkontakt (8) ein Permanentmagnet und ein zwischen beiden Komponenten angeordnetes, mit dem Antrieb (2) rotierenden, halbschaliges Abschirmrad (10) zur Generierung der ersten Pulse zugeordnet ist.

10. Vorrichtung nach Anspruch 1 - 9, **dadurch gekennzeichnet, dass** die Pulsfolgefrequenz der mit der zweiten Sensoreinheit generierten zweiten Pulse kleiner ist als die erste Pulsfolgefrequenz der ersten Pulse.

11. Vorrichtung nach Anspruch 10, **dadurch gekennzeichnet, dass** die zweite Sensoreinheit von einer mechanischen Tastereinheit gebildet ist.

12. Vorrichtung nach Anspruch 11, **dadurch gekennzeichnet, dass** die mechanische Tastereinheit einen mit dem Antrieb (2) rotierenden Schaltnocken (14) und eine mit diesem zusammenwirkende stationäre Schaltfahne (13) eines Schalters (11) aufweist.

13. Vorrichtung nach Anspruch 12, **dadurch gekennzeichnet, dass** der Schaltnocken (14) über eine Zahnraduntersetzung (15) an den Antrieb (2) gekoppelt ist.

14. Vorrichtung nach Anspruch 13, **dadurch gekennzeichnet, dass** durch Vorgabe der Zahnraduntersetzung (15) das Verhältnis der ersten und zweiten Pulsfolgefrequenz vorgebbar ist.

15. Vorrichtung nach einem der Ansprüche 1 - 14, **dadurch gekennzeichnet, dass** der Antrieb (2) über ein Handgerät (4) bedienbar ist, wobei über das Handgerät (4) der Einlernvorgang auslösbar ist.

16. Vorrichtung nach Anspruch 15, **dadurch gekennzeichnet, dass** das Ende eines Einlernvorganges mittels Anzeigemitteln anzeigbar ist.
